# EUROPÄISCHE PATENTSCHRIFT

(11) **EP 0 794 189 B1**
(45) Veröffentlichungstag und Bekanntmachung des Hinweises auf die Patenterteilung: **07.05.2003**
(21) Anmeldenummer: 97102608.3
(22) Anmeldetag: 19.02.1997
(51) Int. Cl.: C07F 9/48, C08K 5/5393

(54) **Salze von phosphonigen Säuren und deren Verwendung als Flammschutzmittel in Kunststoffen**
Salts of phosponous acids and their use as flame-retardants in plastics-materials
Sels d'acides phosphoneux et leur utilisation comme agents ignifugeants pour des matières plastiques

(30) Priorität: 04.03.1996 DE 19608006
(43) Veröffentlichungstag der Anmeldung: 10.09.1997
(73) Patentinhaber: Ticona GmbH, 65451 Kelsterbach (DE)
(72) Erfinder: Kleiner, Hans-Jerg, Dr., 61476 Kronberg (DE); Budzinsky, Winfried, 65812 Bad Soden (DE); Kirsch, Günther, Dr., 65812 Bad Soden (DE)

(56) Entgegenhaltungen:
- EP-A- 0 031 054
- EP-A- 0 038 778
- EP-A- 0 453 871
- EP-A- 0 466 137
- DE-A- 3 616 168
- JP-A- 58 150 502
- US-A- 3 594 347
- US-A- 3 786 114
- US-A- 4 308 197
- SOVIET INVENTIONS ILLUSTRATED Section Ch, Week 8021 2.Juli 1980 Derwent Publications Ltd., London, GB; Class A60, AN 80-37624c XP002032718 MAGDEEVA R.K.: "Alkyl-phosphonic acids preparation" & SU 687 079 A (MOSC TEACH TRAIN CO.) , 25.September 1979

## Beschreibung

Die Erfindung betrifft Salze von phosphonigen Säuren und deren Verwendung als Flammschutzmittel in Kunststoffen.

Polymere werden häufig dadurch flammfest, daß man diesen phosphorhaltige oder halogenhaltige Verbindungen oder Gemische davon zusetzt.

Die US-P 4,308,197 offenbart Verbundwerkstoffe für den Flugzeugbau, die durch Zusatz von Ammonium- oder Aminsalzen einer Phosphon- oder Phosphinsäure flammfest ausgerüstet sind. In der EP-A 453871 sowie der EP-A 466137 sind es Salze von Triazin-Derivaten mit Phosphor-haltigen Säuren, die als Flammhemmer in Polymeren eingesetzt werden. Die Verwendung von Cadmium- oder Bariumsalzen von Phenylphospinsäuren oder Mono- oder Diphenylphosphorsäuren als Additive, die die Verfärbung mit Bromverbindungen flammfest ausgerüsteter Polycarbonate beim Spritzgießen reduzieren, sind in der US-P 3,786,114 beschrieben. In der US-P 3,594,347 sind es arylphosphonige Säuren und deren Salze, die Verfärbungen des Polykondensationsgemischs von aromatischen Dlcarbonsäuren oder deren Estem mit Glykolen zu Polyestern reduzieren. Die DE-A 3616168 offenbart Magnesium- und Calciumphosphinate als Binder in basischen Feuerfestrohstoffen wie Magnesiumoxid. Die Verwendung von alkylphosphonigen Säuren als Flammhemmer in Polymeren lehrt die SU-687079.

Einige Polymere werden bei hohen Temperaturen, z.B. bei 250°C oder höheren Temperaturen verarbeitet. Aus diesem Grund eignen sich viele bekannte Flammhemmer nicht für solche Anwendungen, weil sie zu flüchtig oder nicht ausreichend hitzebeständig sind.

Es war daher Aufgabe der vorliegenden Erfindung flammhemmende Zusatzstoffe zur Verfügung zu stellen, welche nicht die Nachteile der bekannten flammhemmenden Zusatzstoffe aufweisen. Insbesondere sollen die flammhemmenden Zusatzstoffe einfach und preiswert herzustellen sein und eine gute flammhemmende Wirkung haben und sich durch eine hohe Temperaturbeständigkeit auszeichnen.

Es wurde nun überraschenderweise gefunden, daß Calcium und Aluminiumsalze von phosphonigen Säuren als flammhemmende Mittel in Kunststoffen verwendbar sind.

Gegenstand der Erfindung ist daher die Verwendung von Calcium-und Aluminiumsalze von phosphonigen Säuren als flammhemmender Zusatz oder Flammschutzmittel in Kunststoffen.

Ein weiterer Gegenstand der Erfindung sind Kunststoffe oder Kunststoff-Formmassen, die mindestens ein Calcium oder Aluminiumsalz einer phosphonigen Säure enthalten.

Phosphonige Säure ist die Bezeichnung für organisch substituierte phosphonige Säuren der Formel

RHP(O)(OH),

wobei
- R: einen geradkettigen oder verzweigten C₁-C₁₂-Alkylrest, bevorzugt einen verzweigten oder unverzweigten C₁-C₈-Alkylrest, insbesondere C₁-C₄-Alkyl, wie Methyl, Ethyl, Propyl, Isopropyl, n-Butyl, s-Butyl, t-Butyl, Pentyl, Hexyl, Heptyl, Octyl, Nonyl, Decyl; oder
einen mit Ethergruppen substituierten C₁-C₁₂-Alkylrest, wie Alkoxymethyl, di-Alkoxymethyl, Phenoxymethyl; oder
einen Arylalkylrest wie Benzyl; oder
einen Cycloalkylrestl wie Cyclohexyl; oder
einen unsubstituierten oder substituerten Arylrest wie Phenyl, Pyridyl, Naphthyl, Halogen-phenyl (Chlorphenyl), Methylphenyl, Isopropyl-phenyl, Hydroxy-naphthyl
bedeutet.

Für die Zwecke der vorliegenden Erfindung sind Salze der Methanphosphonigen Säure, CH₃PH(O)(OH) sowie der Phenylphosphonigen Säure, C₆H₅PH(O)(OH) besonders bevorzugt.

Die Salze sind die Calcium- und Aluminium-Salze, besonders bevorzugt die Aluminium-Salze.

Die Salze können aus den vorstehend genannten phosphonigen Säuren in wässriger Lösung durch Umsetzung mit den entsprechenden Metallcarbonaten, Metallhydroxiden oder Metalloxiden hergestellt werden. Hierzu wird im allgemeinen die phosphonige Säure in Wasser gelöst und vorteilhafterweise unter Rühren mit dem entsprechenden Metallhydroxid, Metallcarbonat oder Metalloxid in stöchiometrischen Mengen versetzt. Die Reaktionsmischung wird dann im allgemeinen erwärmt, vorzugsweise auf einen Temperaturbereich von 30 bis 150°C, insbesondere 70 bis 110°C, und mehrere Stunden gerührt. Die Reaktionszeiten liegen im Bereich von einigen Stunden (mindestens 5 Stunden) bis zu mehreren Tagen (1 bis 7 Tage). Nach erfolgter Umsetzung wird die Reaktionsmischung durch übliche Methoden (Abkühlen, Absaugen, Waschen, Trocknen etc.) aufbereitet.

Die Ausgangsverbindungen sind im Stand der Technik bekannt und im Handel erhältlich, oder sie können nach bekannten gängigen Verfahren hergestellt werden.

Kunststoffe sind in der Regel Thermoplaste wie Polyester, Polyamide, Polyolefine. Bevorzugte Polyester sind Polyethylenterephthalat (PET) und Polybutylenterephthalat (PBT). Bevorzugte Polyamide sind Polyamid 66 und Polyamid 46.

Polyamide und Polyester, die erfindungsgemäß eingesetzt werden können, sind beispielsweise in "Ullmann's Encyclopedia of Industrial Chemistry, ed. Barbara Elvers, Vol. A21, Kapitel 'Polyamide' (S. 179-205) und Kapitel 'Polyesters' (S. 227-251), VCH Publishers, Weinheim-Basel-Cambridge-New York 1992" beschrieben, worauf Bezug genommen wird.

Die Menge der den Kunststoffen zuzusetzenden Phosphonite kann innerhalb weiter Grenzen variieren. Im allgemeinen verwendet man 5 bis 30 Gew.-%, vorzugsweise 10 bis 20 Gew.-%, jeweils bezogen auf das Polymer. Die optimale Menge hängt von der Natur des Polymeren und der Art des eingesetzten Salzes ab und kann durch Versuche leicht bestimmt werden.

Phosphonite können je nach Art des verwendeten Polymeren und der gewünschten Eigenschaften in verschiedener physikalischer Form angewendet werden. So können sie z.B. zur Erzielung einer besseren Dispersion im Polymeren zu einer feinteiligen Form vermahlen werden. Falls erwünscht können auch Gemische verschiedener Phosphonite eingesetzt werden.

Die eingesetzten Phosphonite sind im allgemeinen genügend thermisch stabil, zersetzen die Polymeren weder bei der Verarbeitung noch beeinflussen sie den Herstellprozess der Kunststoff-Formmasse. Diese thermische Stabilität der Phosphonite ist überraschend, da bekanntlich die den Phosphoniten zugrunde liegenden phosphonigen Säuren sich bereits ab ca. 130 bis 200 °C zersetzen. Die Phosphonite sind in der Regel unter Herstellungs- und Verarbeitungsbedingungen für Polymere nicht flüchtig.

Das Phosphonit kann in das Polymer eingearbeitet werden, indem beides vermischt und anschließend in einem Compoundieraggregat (z.B. Zweischneckenextruder) das Polymer aufgeschmolzen und das Phosphonit in der Polymerschmelze homogenisiert wird. Die Schmelze kann als Strang abgezogen, gekühlt und granuliert werden. Das Salz kann auch direkt in das Compoundieraggregat dosiert werden.

Es ist ebenso möglich, die Phosphonite einem fertigen Kunststoff-Granulat beizumischen und direkt auf einer Spritzgießmaschine zu verarbeiten oder vorher in einem Extruder aufzuschmelzen, zu granulieren und nach einem Trocknungsprozess zu verarbeiten.

Die Phosphonite können beispielsweise bei der Herstellung von Polyester auch während der Polykondensation zugegeben werden.

Den Kunststoff-Einstellungen können neben den Phosphoniten auch Füll- und Verstärkungsstoffe wie Glasfasern, Glaskugeln oder Mineralien wie Kreide zugesetzt werden. Daneben können die Produkte andere übliche Zusätze wie UV-Stabilisatoren, Gleitmittel, Farbmittel, Pigmente, Nukleierungsmittel oder Antistatika enthalten.

Die mit Phosphonit flammfest ausgerüsteten Kunststoffe wie Polyamide und Polyester eignen sich zur Herstellung von Formkörpern, Filmen, Fäden und Fasern, z.B. durch Spritzgießen, Extrudieren oder Verpressen.

Phosphonit enthaltende Kunststoffe, insbesondere Polyester und Polyamide, zeichnen sich durch eine hohe Kriechstromfestigkeit (höherer CTI) aus. Besondere Anwendungen dieser Kunststoffe sind:
Elektrische Bauteile, wie Spulenkörper, Transformatoren, Relais, Schalter, Steckverbindung, Motoren und Motorenteile (Rotoren, Lagerschilde etc.), dreidimensionale Teile mit integrierten Leiterstrukturen ("Molded Interconnection Devices" = MID), Sockel (z.B. SIMM-Sockel),
mechanische Bauteile in Elektro- und Haushaltsgeräten, z.B. Zahnräder, Hebel, Nockenwellen, Abstandhalter, Scharniere, Gleitlager,
Gehäuse, Abdeckungen, Ummantelungen und Beschichtungen von elektrischen Bauteilen und Geräten, z.B. Kondensatorgehäuse, Relaisgehäuse, Kondensatordeckel, Kabelummantelungen.

Ein weiterer Gegenstand der Erfindung ist daher die Verwendung von Kunststoffen, die mindestens ein Phosphonit enthalten, zur Herstellung von Formkörpern, insbesondere elektrische Bauteile, mechanische Bauteile, Stecker, Fassungen, Gehäuse, Abdeckungen, Ummantelungen, Beschichtungen.

Phosphonite können auch Bestandteil von Lacken wie Brandschutzlacken, insbesondere von Brandschutzlacken für Kunststoffe wie Polyoxymethylen, Polyester oder Polyamid sein.

Gegenstand der Erfindung ist daher auch die Verwendung von Phosphoniten als Bestandteil von Lacken, insbesondere von Brandschutzlacken.

### Beispiele

### Herstellung von Salzen der phosphonigen Säure:

1. Herstellung des Calciumsalzes der Phenylphosphonigen Säure 426 g (3,0 mol) Phenylphosphonige Säure in 852 g Wasser zum Lösen auf 60°C erwärmt.
   111 g (1,5 mol) Calciumhydroxid portionsweise unter lebhaftem Rühren eingetragen in 40 Minuten. Dann wird 8 Stunden bei 90°C gerührt, abgekühlt, abgesaugt und mit Wasser gewaschen. Man erhält nach Trocknung des Filterkuchens bei 130°C im Vakuum-Trockenschrank 432 g.
   Ausbeute: ca. 90 % der Theorie.
   Schmelzpunkt: >360°C.
2. Herstellung des Aluminiumsalzes der Phenylphosphonigen Säure 568 g (4,0 mol) Phenylphosphonige Säure in 1140 g Wasser zum Lösen auf 60°C erwärmt.
   104 g (1,33 mol) Aluminiumhydroxid unter lebhaftem Rühren zugegeben, dabei wird auf 90°C erwärmt. Insgesamt wird 68 Stunden bei 85 - 90°C gerührt, dann wird gekühlt, abgesaugt und mit Wasser gewaschen. Man erhält nach Trocknung im Vakuum-Trockenschrank bei 130°C bis zur Gewichtskonstanz 561 g eines weißen Pulvers.
   Ausbeute: 93,5 % der Theorie
   Schmelzpunkt: >320°C.
3. Herstellung des Aluminiumsalzes der Methanphosphonigen Säure
   528 g (6,6 mol) Methanphosphonige Säure in 700 g Wasser gelöst und 171,6 g (2,2 mol) Aluminiumhydroxid unter lebhaftem Rühren zugegeben, dabei wird auf 85°C erwärmt. Insgesamt wird 48 Stunden bei 80 - 90°C gerührt, dann wird gekühlt, abgesaugt und mit Wasser gewaschen. Man erhält nach Trocknung 485 g eines weißen Pulvers.
   Ausbeute: ca. 84 % der Theorie.
   Schmelzpunkt: >315°C.
3.1 Herstellung und Prüfung von flammhemmenden Polyester Die Anwendung des Aluminiumsalzes der Methanphosphonigen Säure in Polybutylentherephtalat (PBT) wurde geprüft. Hierzu wurde das Aluminiumsalz der Methanphosphonigen Säure nach Beispiel 3 mit dem Polymeren vermischt und auf einem handelsüblichen Zweiwellen-Compounder eingearbeitet. Für die glasfaserverstärkten Einstellungen wurden 30 Gew.-% für Polyester handelsübliche Glasfasern in die Schmelze dosiert. Die Massetemperaturen bei der Compoundierung betragen ca. 250°C. Die Probekörper wurden auf einer Spritzgußmaschine nach ISO 7792-2 hergestellt. An Probekörpern mit einer Dicke von 0,8 mm wurde die Brandklasse UL 94 (Underwriter Laboratories) bestimmt.

Im ersten Versuch enthält die Formmasse 30 Gew.-%, bezogen auf das Gewicht des PBT, Aluminiumsalz der Methanphosphonigen Säure nach Beispiel 3. Es wurde die Brandklasse V-0 ermittelt. In einem zweiten Versuch bei einer Konzentration des Aluminiumsalzes von 20 Gew.-% bezogen auf das Gewicht des PBT, ist die Brandklasse ebenfalls V-0.

## Patentansprüche

1. Verwendung von Calcium- oder Aluminiumsalzen von phosphonigen Säuren gemäß Formel RHP(O)(OH), worin
R einen geradkettigen oder verzweigten C₁-C₁₂-Alkylrest, oder
einen mit Ethergruppen substituierten C₁-C₁₂-Alkylrest, oder
einen Arylalkylrest, oder
einen Cycloalkylrest, oder
einen unsubstituierten oder substituierten Arylrest
bedeutet, als flammhemmender Zusatz oder als Flammschutzmittel in Polyester-, Polyamid oder Polyolefin - Kunststoffen.

2. Verwendung von Calcium- oder Aluminiumsalzen von phosphonigen Säuren gemäß Anspruch 1, worin
R einen verzweigten oder unverzweigten C₁-C₈-Alkylrest, oder
als einen mit Ethergruppen substituierten C₁-C₁₂-Alkylrest
Alkoxymethyl, di-Alkoxymethyl oder Phenoxymethyl, oder
als einen Arylalkylrest Benzyl, oder
als einen Cycloalkylrest Cyclohexyl, oder
als einen unsubstituierten oder substituierten Arylrest Phenyl,
Pyridyl, Naphthyl, Halogen-phenyl, Methylphenyl, Isopropyl-phenyl oder Hydroxy-naphthyl
bedeutet.

3. Verwendung von Calcium- oder Aluminiumsalzen von phosphonigen Säuren nach Anspruch 1 und/oder 2, worin R einen C₁-C₄-Alkylrest bedeutet.

4. Verwendung von Calcium- oder Aluminiumsalzen von phosphonigen Säuren nach einem oder mehreren der Ansprüche 1 bis 3, wobei die phosphonigen Säuren die Phenylphosphonige Säure und/oder die Methanphosphonige Säure sind.

5. Verwendung von Calcium- oder Aluminiumsalzen von phosphonigen Säuren nach einem oder mehreren der Ansprüche 1 bis 4 in Polyethylenterephthalat oder Polybutylenterephthalat.

6. Verwendung von Calcium- oder Aluminiumsalzen von phosphonigen Säuren nach einem oder mehreren der Ansprüche 1 bis 4 in Polyamid 66 oder Polyamid 46.

7. Flammgeschützter Kunststoff oder Kunststoff-Formmasse enthaltend ein Calcium- oder Aluminiumsalz nach einem oder mehreren der Ansprüche 1 bis 6, **dadurch gekennzeichnet, dass** das Calcium- oder Aluminiumsalz in einer Menge von 5 bis 30 Gew.-%, bezogen auf das Polymer, vorliegt.

8. Flammgeschützter Kunststoff oder Kunststoff-Formmasse enthaltend ein Calcium- oder Aluminiumsalz nach einem oder mehreren der Ansprüche 1 bis 6, **dadurch gekennzeichnet, dass** das Calcium- oder Aluminiumsalz in einer Menge von 10 bis 20 Gew.-%, bezogen auf das Polymer, vorliegt.

9. Verwendung von Kunststoffen oder Kunststoff-Formmassen nach Ansprüchen 7 oder 8 zur Herstellung von Formkörpem.

10. Verwendung von Kunststoffen oder Kunststoff-Formmassen nach Ansprüchen 7 oder 8 zur Herstellung von elektrischen Bauteilen, mechanischen Bauteilen, Steckern, Fassungen, Gehäusen, Abdeckungen, Ummantelungen oder Beschichtungen.

11. Verwendung von Salzen nach einem oder mehreren der Ansprüche 1 bis 4 als Bestandteil von Brandschutzlacken für Polyester-, Polyamid- oder Polyoxymethylen-Kunststoffe.

## Claims

1. Use of calcium or aluminum salts of phosphonous acids as per the formula RHP(O) (OH), where
R is a straight-chain or branched C₁-C₁₂-alkyl radical, or
a C₁-C₁₂-alkyl radical substituted by ether groups, or
an arylalkyl radical, or
a cycloalkyl radical, or
an unsubstituted or substituted aryl radical,
as a flame retardant in polyester, polyamide or polyolefin plastics.

2. Use of calcium or aluminum salts of phosphonous acids as per claim 1, wherein
R is a branched or unbranched C₁-C₈-alkyl radical, or
as a C₁-C₁₂-alkyl radical substituted by ether groups
alkoxymethyl, dialkoxymethyl or phenoxymethyl, or
as an arylalkyl radical benzyl, or
as a cycloalkyl radical cyclohexyl, or
as an unsubstituted or substituted aryl radical phenyl, pyridyl, naphthyl, halophenyl, methylphenyl, isopropylphenyl or hydroxynaphthyl.

3. Use of calcium or aluminum salts of phosphonous acids according to claim 1 and/or 2, wherein R is a C₁-C₄-alkyl radical.

4. Use of calcium or aluminum salts of phosphonous acids according to one or more of claims 1 to 3, wherein the phosphonous acids are phenylphosphonous acid and/or methanephosphonous acid.

5. Use of calcium or aluminum salts of phosphonous acids according to one or more of claims 1 to 4 in polyethylene terephthalate or polybutylene terephthalate.

6. Use of calcium or aluminum salts of phosphonous acids according to one or more of claims 1 to 4 in nylon 66 or nylon 46.

7. Flame-retardant plastic or plastic molding composition containing a calcium or aluminum salt according to one or more of claims 1 to 6, **characterized in that** the calcium or aluminum salt is present in an amount of 5 to 30% by weight, based on the polymer.

8. Flame-retardant plastic or plastic molding composition containing a calcium or aluminum salt according to one or more of claims 1 to 6, **characterized in that** the calcium or aluminum salt is present in an amount of 10 to 20% by weight, based on the polymer.

9. Use of plastics or plastic molding compositions according to claims 7 or 8 for manufacturing molded parts.

10. Use of plastics or plastic molding compositions according to claims 7 or 8 for manufacturing electrical components, mechanical components, plugs, mounts, housings, coverings, sheathings or overcoatings.

11. Use of salts according to one or more of claims 1 to 4 as a constituent of fire protection coatings for polyester, polyamide or polyoxymethylene plastics.

## Revendications

1. Utilisation de sels de calcium ou d'aluminium d'acides phosphoneux de formule RHP(O)(OH), dans laquelle
R représente un radical alkyle en C₁-C₁₂ à chaîne droite ou ramifiée, ou un radial alkyle en C₁-C₁₂ substitué par des groupes éther, ou
un radical arylalkyle, ou
un radical cycloalkyle, ou
un radical aryle substitué ou non substitué
en tant qu'additif retardateur de combustion ou en tant qu'agent ignifuge dans des matières plastiques de type polyester, polyamide ou polyoléfine.

2. Utilisation de sels de calcium ou d'aluminium d'acides phosphoneux selon la revendication 1, dans lesquels
R représente un radical alkyle en C₁-C₈ ramifié ou non ramifié, ou, en tant qu'un radical alkyle en C₁-C₁₂ substitué par des groupes éther, un radical alcoxyméthyle, dialcoxyméthyle ou phénoxyméthyle, ou
en tant qu'un radical arylalkyle, le groupe benzyle, ou
en tant qu'un radical cycloalkyle, le groupe cyclohexyle, ou
en tant qu'un radical aryle substitué ou non substitué, un groupe phényle, pyridyle, naphtyle, halogénophényle, méthylphényle, isopropylphényle ou hydroxynaphtyle.

3. Utilisation de sels de calcium ou d'aluminium d'acides phosphoneux selon la revendication 1 et/ou la revendication 2, dans lesquels R représente un radical alkyle en C₁-C₄.

4. Utilisation de sels de calcium ou d'aluminium d'acides phosphoneux selon une ou plusieurs des revendications 1 à 3, dans laquelle les acides phosphoneux sont l'acide phénylphosphoneux et/ou l'acide méthanephosphoneux.

5. Utilisation de sels de calcium ou d'aluminium d'acides phosphoneux selon une ou plusieurs des revendications 1 à 4, dans du poly(éthylène-téréphtalate) ou du poly(butylène-téréphtalate).

6. Utilisation de sels de calcium ou d'aluminium d'acides phosphoneux selon une ou plusieurs des revendications 1 à 4, dans du polyamide 66 ou du polyamide 46.

7. Matière plastique ou matière plastique à mouler ignifugée, contenant un sel de calcium ou d'aluminium selon une ou plusieurs des revendications 1 à 6, **caractérisée en ce que** le sel de calcium ou d'aluminium est présent en une quantité de 5 à 30 % en poids, par rapport au polymère.

8. Matière plastique ou matière plastique à mouler ignifugée, contenant un sel de calcium ou d'aluminium selon une ou plusieurs des revendications 1 à 6, **caractérisée en ce que** le sel de calcium ou d'aluminium est présent en une quantité de 10 à 20 % en poids, par rapport au polymère.

9. Utilisation de matières plastiques ou de matières plastiques à mouler selon la revendication 7 ou 8, pour la fabrication de corps moulés.

10. Utilisation de matières plastiques ou de matières plastiques à mouler selon la revendication 7 ou 8, pour la fabrication de composants électriques, de composants mécaniques, de fiches, de douilles, de boîtiers, de couvercles, de gaines ou de revêtements.

11. Utilisation de sels selon une ou plusieurs des revendications 1 à 4, en tant que composant de vernis ignifuge pour des matières plastiques de type polyester, polyamide ou polyoxyméthylène.
